(19) Europäisches Patentamt
European Patent Office
Office européen des brevets

(11) Veröffentlichungsnummer: **0 031 956**
**B1**

(12) # EUROPÄISCHE PATENTSCHRIFT

(45) Veröffentlichungstag der Patentschrift: **23.06.82**

(51) Int. Cl.³: **G 03 C 1/733**

(21) Anmeldenummer: **80108209.0**

(22) Anmeldetag: **24.12.80**

(54) **Lichtempfindliches Aufzeichnungsmaterial.**

(30) Priorität: **04.01.80 DE 3000167**

(43) Veröffentlichungstag der Anmeldung: **15.07.81 Patentblatt 81/28**

(45) Bekanntmachung des Hinweises auf die Patenterteilung: **23.06.82 Patentblatt 82/25**

(84) Benannte Vertragsstaaten: **BE CH DE FR GB LI**

(56) Entgegenhaltungen: **keine**

(73) Patentinhaber: **AGFA-GEVAERT Aktiengesellschaft, D-5090 Leverkusen 1 (DE)**

(72) Erfinder: **Hocker, Jürgen, Dr., Eichenweg 6, D-5060 Bergisch Gladbach 2 (DE)**
Erfinder: **Ranz, Erwin, Dr., Euckenstrasse 1, D-5090 Leverkusen 1 (DE)**

EP 0 031 956 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Lichtempfindliches Aufzeichnungsmaterial

Die Erfindung betrifft ein lichtempfindliches Aufzeichnungsmaterial, das als lichtempfindliche Verbindung ein cyclisches Polyimid enthält.

Es sind zahlreiche Verfahren bekannt, bei denen lichtempfindliche organische Substanzen zur Bildaufzeichnung verwendet werden. Einem Teil dieser Verfahren liegen photochemische Umlagerungen bzw. Umsetzungen organischer Verbindungen zugrunde, die eine Farbänderung ergeben. Derartige photochemische Reaktionen organischer Verbindungen wurden zusammenfassend beschrieben, z. B. in »Präparative organische Photochemie« (A. Schönberg, Springer Verlag 1958) und »Light-sensitive System« (J. Kosar, John Wiley and Sons, New York, 1965).

Hierzu gehört z. B. die Bildung von Monomethinfarbstoffen bei Photolyse von Trihalogenmethylverbindungen im UV-Licht in Gegenwart von solchen aromatischen oder heterocyclischen Verbindungen, die aufgrund ihrer Konstitution für Kondensation bzw. Diazokupplung besonders rationsfähige CH-Ringglieder besitzen.

Die bekannten Systeme sind von nur begrenzter praktischer Verwendbarkeit, da ihre Lichtempfindlichkeit im allgemeinen zu gering ist.

Aus der DE-C-1 522 385, den DE-A-1 961 373 und 1 955 751, sowie den DE-C-1 955 070 und 2 000 623 ist die Verwendung cyclischer Polyimide als lichtempfindliche Verbindungen in Aufzeichnungsmaterialien bekannt. Als Nachteil dieser bekannten cyclischen Polyimide hat sich ihr niedermolekularer Aufbau erwiesen. Zur Herstellung von Aufzeichnungsschichten müssen die bekannten Polyimide in Bindemittel eingebettet werden. Die niedermolekularen Polyimide neigen dazu, aus solchen bindemittelhaltigen Aufzeichnungsschichten auszudiffundieren, eine Eigenschaft, die insbesondere die Lagerfähigkeit der Aufzeichnungsmaterialien beeinträchtigt.

Darüber hinaus genügt auch die Lichtempfindlichkeit der Aufzeichnungsmaterialien nicht den Anforderungen der Praxis. Die Aufzeichnungsmaterialien sind ferner für Computer und Oszillographen verwendbare Aufzeichnungsmaterialien ungeeignet. Von diesen wird nicht nur relativ hohe Lichtempfindlichkeit verlangt, sondern auch die bildgebende Reaktion soll reversibel sein, d. h., das erzeugte Bild soll wieder löschbar sein, so daß das Aufzeichnungsmaterial erneut verwendet werden kann.

Der Erfindung liegt die Aufgabe zugrunde, ein Aufzeichnungsmaterial zu entwickeln, das eine filmbildende photochrome Verbindung enthält, deren Lichtempfindlichkeit und deren photochrome Eigenschaften eine Verwendung des Aufzeichnungsmaterials in Computern und Oszillographen zuläßt.

Gegenstand der Erfindung ist ein lichtempfindliches, cyclische Polyimide enthaltendes Aufzeichnungsmaterial, das dadurch gekennzeichnet ist, daß als lichtempfindliche Substanz eine Verbindung der Formel

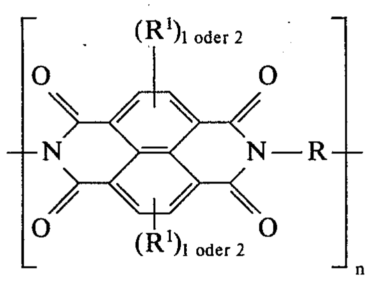

enthalten ist, worin

R ein zweiwertiger aliphatischer Rest ist, der eine Elektronendonatorfuktion enthält,
$R^1$ Wasserstoff, Halogen, $-SO_3H$, $-CN$, $-COOR^2$, $-N(R^3)_2$, $-OR^4$, $-NO_2$;
$R^2$, $R^3$, $R^4$ Wasserstoff oder $C_1-C_6$-Alkyl, und
n eine ganze Zahl von 2 bis 1000, bevorzugt 10 bis 500, insbesondere 10 bis 200, bedeuten.

Der Rest R ist insbesondere ein gesättigter oder olefinisch ungesättigter aliphatischer Rest mit bis zu 12 Kohlenstoffatomen, welcher mindestens ein Heteroatom wie Sauerstoff, Schwefel oder $NR^2$ ($R^2$ wie oben definiert) in der Hauptkette oder in einer Seitenkette enthalten muß.

Zur erfindungsgemäßen Verwendung besonders geeignet sind die cyclischen Polyimide der obigen Formel, in der $R^1$ Wasserstoff ist, und n denen der Rest R von einem Alkylentriamin oder einem Oxyalkylendiamin der Formeln I bzw. II abgeleitet ist

$$NH_2-\left[(CH_2)_n-\underset{\displaystyle R^5}{\underset{|}{N}}-\right]_{1-5}(CH_2)_n-NH_2 \qquad (I)$$

$R^5$ = H, Alkyl, $CR^2O$

n = 1–4.

$$NH_2-(CH_2)_m-O-[(CH_2)_m-O]_o-(CH_2)_m-NH_2 \qquad (II)$$

n = 1–4,

o = 0–2.

Besonders bevorzugt sind die Umsetzungsprodukte von Naphthalin-1,4,5,8-tetracarbonsäuredianhydrid mit Diethylentriamin, Triethylentetramin, Tetraethylenpentamin bzw. deren N-Methylderivate, die jedoch zwei freie endständige Aminogruppen enthalten müssen, sowie 1,4-Bis-(3-aminopropyl)-piperazin.

Die erfindungsgemäß verwendeten Polyimide lassen sich nach bekannten Methoden herstellen, wie sie beispielsweise in Sorenson-Campbell, Präparative Methoden der Polymeren-Chemie, Verlag Chemie, Weinheim 1962, in H. Lee, D. Stoffey, K. Neville, New Linear Polymers, Mc Graw-Hill Book Company, New York, San Franzisco, Toronto, London, Sydney, 1967, oder in R. J. Cotter, M. Matzner, Ring-Forming Polymerizations Organic Chemistry Vol. 13—B,2, Academic Press New York, London, 1972, beschrieben werde.

Man kann beispielsweise Naphthalin-1.4.5.8-tetracarbonsäuredianhydrid oder Naphthalin-1.4.5.8-tetracarbonsäure, deren aromatische Ringe bereits durch die Reste $R^1$ substituiert sein können, mit einem den Rest R einschließlich der beiden Stickstoffatome liefernden Diamin umsetzen. Diese Umsetzung kann in einem organischen Lösungsmittel, beispielsweise Dimethylformamid, N-Methylpyrrolidon, Pyridin, Ameisensäure, Essigsäure, Dimethylsulfoxid, Dimethylacetamid oder Gemischen daraus ablaufen. Die Reaktion ist auch in der Schmelze ohne Lösungsmittel möglich. Das bei der Umsetzung gebildete Wasser kann entweder vom Lösungsmittel aufgenommen werden oder destillativ abgetrennt werden. Die Reaktion kann auch in zwei Stufen ausgeführt werden, durch Umsetzung der Dicarbonsäure und des Diamins in erster Stufe zur Amidsäure und in zweiter Stufe zum Polyimid. Bei der Umsetzung verwendet man im allgemeinen etwa stöchiometrische Mengen der Reaktanten, die Umsetzung beginnt meist bei Temperaturen von etwa 0 bis 80°C. Es ist empfehlenswert, nach Beendigung der Hauptreaktion das Reaktionsgemisch noch einige Zeit bei Temperaturen von etwa 80 bis etwa 120°C zu halten, um die Reaktion zu vervollständigen.

Arbeitet man in Gegenwart organischer Säuren wie Ameisensäure oder Essigsäure als Lösungsmittel, so erhält man, falls die aliphatische Kette R eine NH-Funktion enthält, die entsprechenden Acylierungsprodukte. Wenn R eine $NR^2$-Funktion enthält, kann man die erhaltenen cyclischen Polyimide auch in die Ammoniumsalze anorganischer oder organischer Säuren umwandeln. Diese Derivate sind wasserlöslich und können durch Zusatz von Basen gefällt werden.

Die im folgenden mit ihrem Herstellungsverfahren beschriebenen Verbindungen sind Beispiele für photochrome Polyimide, die für erfindungsgemäße Aufzeichnungsmaterialien besonders geeignet sind.

Herstellungsbeispiel 1, Methode A

Zu einer Suspension aus 100 Gew.-Teilen Dimethylformamid, 50 Gew.-Teilen Pyridin und 10,72 Gew.-Teilen Naphthalintetracarbonsäuredianhydrid tropft man bei Raumtemperatur unter Stickstoff eine Lösung von 4,15 Gew.-Teilen Bis-(2-aminoethyl)-amin in 50 Gew.-Teilen Pyridin. Man rührt 4 Stunden bei 100°C, kühlt und saugt ab. Nach Trocknen bei 50°C erhält man 10 Gew.-Teile des Polymeren der unten angegebenen Formel.

Analyse

| | | | | |
|---|---|---|---|---|
| Ber. | C 64.48 | H 3.91 | N 12.53 | O 19.08 |
| Gef. | C 63.2 | H 4.4 | N 11.9 | O 19.1 |

IR (KBr): 1700, 1655 $cm^{-1}$ ($\nu$ co)

NMR ($CD_3COOD$): $\delta$ = 8.83 ppm (4H), 4,8 ppm (4H), 3,9 ppm (4H)

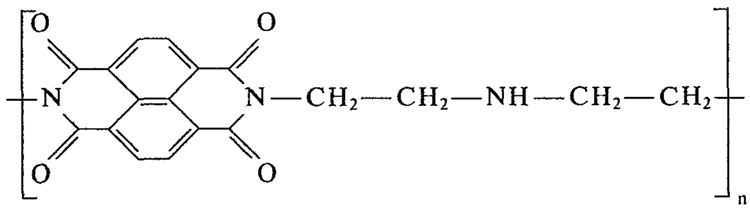

Herstellungsbeispiel 1, Methode B

Zu einer Suspension aus 10,72 Gew.-Teilen Naphthalintetracarbonsäuredianhydrid in 150 Vol.-Teilen Essigsäure tropft man bei Raumtemperatur unter Stickstoff eine Lösung von 4,15 Gew.-Teilen Bis-(2-aminoethyl)-amin in 50 Vol.-Teilen Pyridin und erhitzt 5 Stunden auf 100° C. Nach Abkühlen auf Raumtemperatur saugt man von 9,7 Gew.-Teilen eines Polymeren ab, das sich als das Monoacetat des Polymeren aus Beispiel 1A erweist und im NMR-Spektrum ein zusätzliches Signal bei $\delta = 2{,}25$ ppm zeigt.

Herstellungsbeispiel 2

Analog Beispiel 1, Methode A, setzt man eine Suspension von 100 Gew.-Teilen Dimethylformamid, 50 Gew.-Teilen Pyridin und 10,72 Gew.-Teilen Naphthalintetracarbonsäuredianhydrid mit einer Lösung von 5,25 Gew.-Teilen Bis-(3-aminopropyl)-amin in 50 Gew.-Teilen Pyridin um. Man erhält 14,9 Gew.-Teile eines Polymeren der Formel:

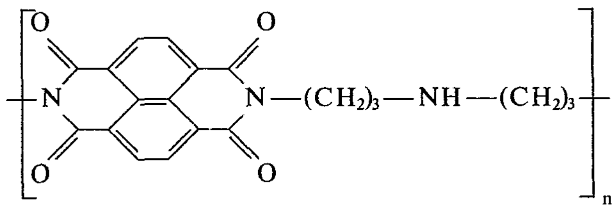

Herstellungsbeispiel 3

Analog Beispiel 1, Methode A, setzt man eine Suspension von 100 Gew.-Teilen Dimethylformamid, 50 Gew.-Teilen Pyridin und 19,72 Gew.-Teilen Naphthalintetracarbonsäuredianhydrid mit einer Lösung von 8,16 Gew.-Teilen Butandiol-(1.4)-bis-(3-aminopropylehter) um. Man erhält 15 Gew.-Teile eines Polymeren der untenstehenden Formel.

| | | | | |
|---|---|---|---|---|
| Berechnet: | C 66,05 | H5,55 | N 6,42 | O 22,00 |
| Gef.: | C 65,0 | H 5,8 | N 6,2 | O 22,6 |

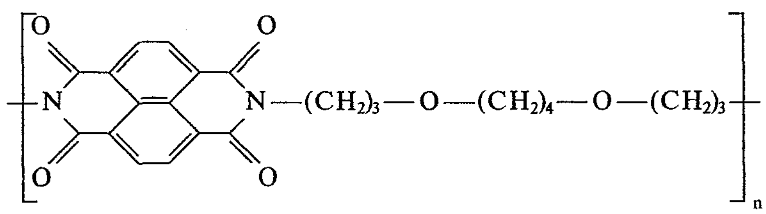

Setzt man die Ausgangsverbindungen nach der Methode 1B um, so erhält man ein identisches Polymeres.

Herstellungsbeispiel 4

Analog Beispiel 1, Methode A, setzt man mit 5,8 Gew.-Teilen Methyl-bis-(3-aminopropyl)-amin um. Man erhält 14,8 Gew.-Teile eines Polymeren mit der unten angegebenen idealisierten Struktur.

| | | | | Gew.-Teile |
|---|---|---|---|---|
| Berechnet: | C 66,84 | H 5,08 | N 11,14 | O 16,96 |
| Gef.: | C 65,1 | H 5,2 | N 10,7 | O 17,9 |

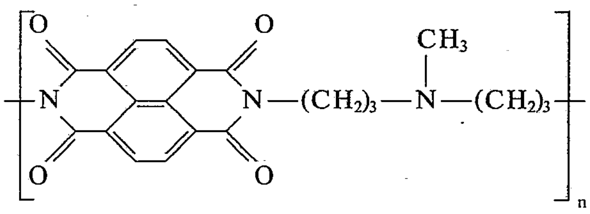

Herstellungsbeispiele 5–22

Die folgenden Di- und Polyamine wurden Analog Beispiel 1, Methode A, mit Naphthalintetracarbonsäuredianhydrid umgesetzt:

| Beispiel Nr.: | | IR [$cm^{-1}$] | | NMR [$\delta$/ppm] oder Analyse | | | |
|---|---|---|---|---|---|---|---|
| 5 | $H_2N—(CH_2—CH_2—NH)_x—CH_2—CH_2—NH_2$<br>x = 2 | 1700/1660 | | 9,0 (4H), 4,85 (4H), 4,0 (8H) | | | |
| 6 | x = 3 | 1700/1655 | Ber.<br>Gef. | C 62,7<br>59,9 | H 5,52<br>5,6 | N 16,64<br>15,3 | O 15,21<br>16,5 |
| 7 | x = 4 | 1700/1660 | | | | | |
| 8 | $H_2N—(CH_2)_3—N—(CH_2)_3—NH_2$<br>$(CH_2)_3—N(CH_3)_2$ | 1710/1665 | Ber. | C 66,80<br>66,25 | H 6,30<br>6,45 | N 12,48<br>12,65 | O 14,26<br>14,65 |
| 9 | $H_2N—(CH_2)_3—N—(CH_2)_3—NH_2$<br>$(CH_2)_3—OC_4H_9$ | 1705/1660 | | 9,0 (4H), 4,6 (4H), 3,7 (10H), 2,5 (6H), 1,6 (4H), 0,95 (3H) | | | |
| 10 | $H_2N—(CH_2)_2—CH—(CH_2)_3—NH_2$<br>$N(CH_3)_2$ | 1705/1660 | | 9,0 (4H), 4,55 (4H), 3,65 (1H), 3,2 (6H), 2,15 (4H), 3,2 (6H), 2,45 (2H) | | | |
| 11 | $H_2N—(CH_2)_3—N—(CH_2)_3—NH_2$<br>$C_4H_9$ | 1705/1660 | Ber.<br>Gef. | C 68,65<br>67,5 | H 6,01<br>6,15 | N 10,02<br>10,20 | O 15,26<br>15,15 |
| 12 | $H_2N—(CH_2)_3—O—(CH_2)_2—O(CH_2)_3—NH_2$<br>(nach Methode 1 B) | 1700/1660 | Ber.<br>Gef. | C 64,5<br>64,2 | H 4,92<br>5,05 | N 6,85<br>6,6 | O 23,5<br>24,1 |

Tabelle (Fortsetzung)

| Beispiel Nr.: | | IR [$cm^{-1}$] | NMR [$\delta$/ppm] oder Analyse | | | | |
|---|---|---|---|---|---|---|---|
| 13 | $H_2N—CH_2—CH_2—S—CH_2—CH_2—NH_2$ | 1700/1660 | | | | | |
| 14 | $(H_2N—CH_2—CH_2—S—C_4H_8)_2O$ | 1705/1665 | | | | | |
| 15 | 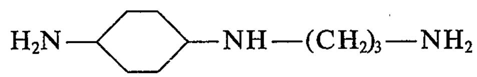 | 1700/1660 | | | | | |
| 16 | 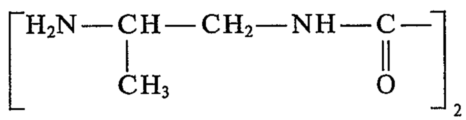 | 1700/1660 | Ber.<br>Gef. | C 60,8<br>59,8 | H 4,17<br>4,6 | N 12,9<br>12,2 | O 22,1<br>23,7 |
| 17 | 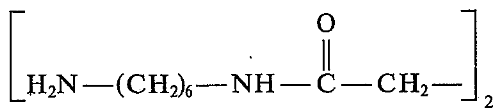 | | 9,0 (4H), 4,4 (4H), 3,6 (4H), 2,8 (8H), 1,4–2,2 (8H) | | | | |
| 18 | $[H_2N—(CH_2)_3—O—(CH_2)_2—]_2O$ | 1705/1660 | Ber.<br>Gef. | C 63,7<br>63,5 | H 5,35<br>5,9 | N 6,19<br>6,15 | O 24,78<br>24,75 |
| 19 | $[H_2N—(CH_2)_3—O—CH_2—]_2C(CH_3)_2$ | 1700/1660 | Ber.<br>Gef. | C 66,66<br>66,55 | H 5,81<br>5,85 | N 6,22<br>6,25 | O 21,31<br>22,0 |
| 20 | $[H_2N—(CH_3)_2—NH—CH_2—]_2$ | 1705/1660 | | | | | |
| 21 | $H_2N—(CH_2)_4—NH—(CH_2)_4—NH_2$ | 1700/1660 | Ber.<br>Gef. | C 66,8<br>65,1 | H 5,06<br>5,55 | N 11,14<br>10,55 | O 16,97<br>17,6 |
| 22 | 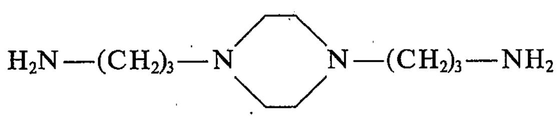 | 1705/1665 | | | | | |

### Herstellungsbeispiel 23

Analog Beispiel 1, Methode A, setzt man 14,25 Gew.-Teile Methyl-bis-(3-aminopropyl)-amin mit 30,3 Gew.-Teilen 2-Chlornaphthalintetracarbonsäuredianhydrid um. Man erhält 39,5 Gew.-Teile des Polymeren nachfolgender Formel.

Analyse

| | | | | |
|---|---|---|---|---|
| Ber. | C 61,26 | H 4,41 | N 10,20 | Cl 8,61 |
| Gef. | C 60,9 | H 4,5 | N 10,4 | Cl 8,9 |

IR (KBr): 1705/1668 $cm^{-1}$ ($\nu$ co)

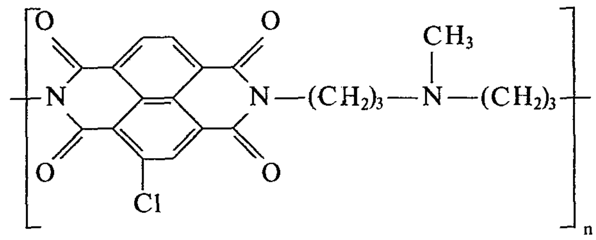

### Herstellungsbeispiel 24

Analog Beispiel 1, Methode A, setzt man 14,5 Gew.-Teile Methyl-bis-(3-aminopropyl)-amin mit 31,3 Gew.-Teilen 2-Nitronaphthalintetracarbonsäuredianhydrid um. Man erhält 43,2 Gew.-Teile des Polymeren nachfolgender Formel.

Analyse

| | | | |
|---|---|---|---|
| Ber. | C 59,71 | H 4,30 | N 13,27 |
| Gef. | C 60,1 | H 4,4 | N 13,7 |

IR (KBr): 1708/1660 $cm^{-1}$ ($\nu$ co)

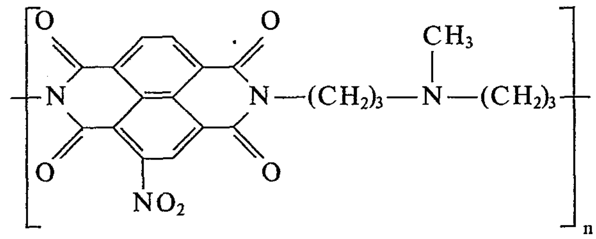

### Herstellungsbeispiel 25

Analog Beispiel 1, Methode A, setzt man 14,5 Gew.-Teile Methyl-bis-(3-aminopropyl)-amin mit 31,2 Gew.-Teilen Naphthalinpentacarbonsäuredianhydrid um. Man erhält 38,2 Gew.-Teile des Polymeren nachstehender Formel.

Analyse

| | | | |
|---|---|---|---|
| Ber. | C 62,70 | H 4,55 | N 9,97 |
| Gef. | C 63,0 | H 4,7 | N 10,2 |

IR (KBr): 1704/1658 $cm^{-1}$ ($\nu$ co)

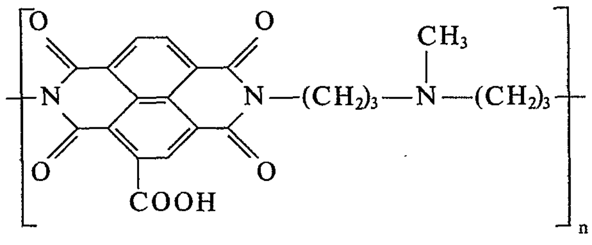

Herstellungsbeispiel 26

Analog Beispiel 1, Methode B, setzt man 13,1 Gew.-Teile Bis-(3-aminopropyl)-amin mit 40,6 Gew.-Teilen Tetrachlor-naphthalintetracarbonsäuredianhydrid um. Man erhält 52,5 Gew.-Teile des Polymeren unten angegebener Formel.

Analyse

| | | | | |
|---|---|---|---|---|
| Ber. | C 47,93 | H 2,62 | N 8,39 | Cl 28,30 |
| Gef. | C 47,6 | H 2,5 | N 8,7 | Cl 27,9 |

IR (KBr): 1712/1664 $cm^{-1}$ ($\nu$ co)

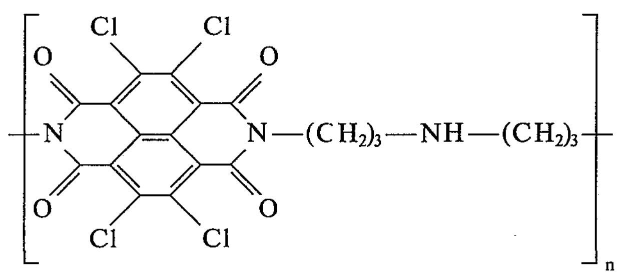

Die Empfindlichkeit der erfindungsgemäßen Aufzeichnungsmaterialien reicht vom ultravioletten bis in den sichtbaren Teil des Spektrums. Für die Belichtung sind daher UV-Lampen, Quecksilberdampflampen, Halogenlampen, Blitzröhren usw. geeignet. Die Belichtungszeit richtet sich selbstverständlich nach der Empfindlichkeit der lichtempfindlichen Verbindung und der Entfernung der Lichtquelle vom lichtempfindlichen Material. Im allgemeinen haben sich Belichtungszeiten zwischen 5 Sekunden und 1—2 Minuten als ausreichend erwiesen. Für die meisten Materialien genügen Zeiten zwischen 5 und 20 Sekunden, um ein hochwertiges, kontrastreiches Bild zu erhalten.

Als Schichtträger der erfindungsgemäßen Aufzeichnungsmaterialien sind die üblichen Produkte geeignet, z. B. Celluloseester wie Celluloseacetat oder Cellulosebutyrat, ferner Polyester, insbesondere auf der Basis von Polyethylenglykol, Terephthalate oder auch Polycarbonate, vorzugsweise solche auf der Basis von Bis-Phenylolalkanen, ferner Papierschichtträger, insbesondere barytierte Papiere.

Die Unterlage kann transparent, oder sie kann gefärbt sein, vorzugsweise mit solchen Farbstoffen, die einen möglichst hohen Kontrast zu den Bildstellen der Aufzeichnungsschicht bilden.

Die in erfindungsgemäßen Materialien verwendeten lichtempfindlichen Verbindungen liefern bei Belichtung gefärbte Produkte, die sich bei Lagerung im Dunkeln mehr oder weniger schnell — es werden Zeiten zwischen wenigen Minuten und einigen Stunden benötigt — in die farblosen Ausgangsverbindungen zurückverwandeln.

Der Rückgang der gefärbten Bildsubstanz in die farblose lichtempfindliche Ausgangsform kann durch Erwärmen sehr stark beschleunigt werden. Erwärmt man das das Bild enthaltende Material auf Temperaturen zwischen 60—100°C, so verschwindet das Bild in wenigen Sekunden. Das lichtempfindliche Material bleibt voll verwendungsfähig und es kann sofort neu belichtet werden. Bei derartigen Schichten ist es möglich, durch gezielte bildmäßige Infrarotbestrahlung des Bildes bestimmte Teile der Information zu löschen.

Aus diesen Gründen haben die erfindungsgemäßen Materialien besondere Bedeutung für solche Verfahren, bei denen die Löschung des Bildes und Wiederverwendung des Materials gefordert wird.

Es besteht die Möglichkeit, die erhaltenen photographischen Bilder zu fixieren, indem der noch unbelichtete Teil der cyclischen Polyimide lichtunempfindlich gemacht wird. Dies kann z. B. durch Einwirkung von Reagentien, die mit ungesättigten Doppelbindungen reagieren erfolgen. Als mit ungesättigten Doppelbindungen reagierende Reagentien kommen u. a. Halogene wie Brom, Chlor oder Jod, Halogenwasserstoffsäuren wie Chlorwasserstoff oder Bromwasserstoff, Ozon, Peroxidsäuren oder Wasserstoff, Sulfenylchloride oder Schwefeldichlorid sowie Kaliumpermanganat in Frage. Eine andere Möglichkeit zur Überführung der lichtempfindlichen cyclischen Polyimide in lichtunempfindlichen Verbindungen besteht in der Auflösung der Imidgruppierung, z. B. durch Hydrolyse zu Polyamidcarbonsäure oder durch Aminolyse zu Polyamiden. Eine Trennung von belichteten und unbelichteten Anteilen der lichtempfindlichen cyclischen Polyimide besteht auch in einer selektiven Herauslösung der einen Komponente durch geeigente Lösungsmittel.

Die hier beschriebenen photochromen Polyimide haben gegenüber den bekannten Verbindungen den Vorteil, daß sie als polymere Verbindungen filmbildend sind und somit zu selbsttragenden photochromen Folien verarbeitet werden können. Ein weiterer Vorteil der vorliegenden Polyimide ist ihre hervorragende Lichtempfindlichkeit und die Reversibilität ihrer durch Belichtung bewirkten Färbung. Beide Eigenschaften machen die Verbindungen geeignet für Aufzeichnungsmaterialien, wie sie zur Verwendung z. B. in Computern oder für Oszillographen benötigt werden. Darüber hinaus

liefern die Polyimide der Erfindung homogene, praktisch kornlose Aufzeichnungsschichten. Die sich daraus ergebenden Vorteile bei einer Verwendung transparenter Schichtträger für eine Betrachtung der Aufzeichnung im Durchlicht liegen auf der Hand.

## Beispiel 1

Eine 5 Gew.-%ige Lösung des photochromen Polyimids entsprechend Herstellungsbeispiel 11, Methode A, in Ameisensäure wird auf eine barytierte Papierunterlage so vergossen, daß nach Trocknen 5 g der Verbindung pro $m^2$ aufgetragen sind. Die Verbindung ist filmbildend und ergibt eine hochglänzende, leicht gelbliche Schicht.

Die Probe wird mit einer Quecksilberhochdrucklampe im Abstand von 20 cm von der Lichtquelle belichtet.

Zwischen Lichtquelle und Probe wird im Kontakt mit der Probe ein transparenter Stufengraukeil mit einer Schwärzungsänderung von 0,15 Dichteeinheiten eingelegt. Nach einer Belichtungszeit von 5 Minuten verfärbt sich die Probe nach braun bis hinter einer Keildichte von 1,2 Dichteeinheiten (=rel. Empfindlichkeit 100). Bei Bestrahlung im direkten Sonnenlicht verfärbt sich die Probe in wenigen Sekunden.

Die spektrale Empfindlichkeit hat ihr Maximum bei 360 nm mit Ausläufern bis 450 nm.

Wird die Probe nach der Belichtung bei Raumtemperatur im Dunkeln aufbewahrt, so verschwindet die Verfärbung und geht nach 1 Minute um ca. 80% zurück. Bei Erwärmung der belichteten Schicht auf 80° C verschwindet die Verfärbung nach 2 bis 3 Sekunden.

Die Probe verfärbt sich nach Abklingen der bei der ersten Belichtung erfolgten Verfärbung und wiederholter Belichtung erneut.

## Beispiel 2

Eine 5 Gew.-%ige Lösung der Verbindung hergestellt nach Beispiel 4, Methode B, in Ameisensäure wird auf eine hochglanzpolierte Metalloberfläche so vergossen, daß 50 g der Verbindung pro $m^2$ aufgetragen werden. Die Schicht läßt sich als selbsttragende Folie ablösen. Die Farbe der Folie ist leicht gelblich und verfärbt sich bei Belichtung mit einer Quecksilberhochdrucklampe zu einem kontrastreichen Olivbraun.

Die rel. Empfindlichkeit beträgt 200 (bestimmt, wie in Beispiel 1 angegeben), die spektrale Empfindlichkeit entspricht der des Polyimids hergestellt nach Beispiel 11, Methode A. Der durch Belichtung gebildete Farbstoff verschwindet nach einer Dunkellagerung von 5 Minuten um ca. 80%. Nach Abklingen der durch Belichtung erfolgten Verfärbung bleibt die Folie lichtempfindlich und kann erneut belichtet werden.

## Beispiel 3

Das Polyimid hergestellt nach Beispiel 15, Methode B, und vergossen wie in Beispiel 1 angegeben, weist sowohl die rel. Empfindlichkeit (100) als auch die spektrale Empfindlichkeit des Polyimids entsprechend Herstellungsbeispiel 11, Methode A, auf.

Wird eine transparente photographische Strich- oder Halbtonvorlage in Kontakt mit der Aufzeichnungsschicht gebracht und durch diese Vorlage mit UV-Licht belichtet, so erhält man positive braune Strich- bzw. Halbtonbilder der Vorlagen, die bei Dunkellagerung und Zimmertemperatur nach ca. 5 Minuten völlig verschwunden sind. Anschließend können andere photographische Vorlagen auf die Schicht kopiert werden. Die Löschung der Bilder kann wie in Beispiel 1 beschrieben durch Erhöhung der Temperatur entsprechend beschleunigt werden.

## Beispiel 4

Das Polyimid nach Herstellungsbeispiel 20, Methode B, vergossen wie in Beispiel 1 angegeben, verfärbt sich bei UV-Belichtung von Hellbraun nach Braun. Die rel. Empfindlichkeit, gemessen wie in Beispiel 1 beschrieben, beträgt 63, die spektrale Empfindlichkeit gleicht dem des Polyimids, hergestellt nach Beispiel 11, Methode A. Wie bei dieser Verbindung verschwindet der durch Belichtung gebildete Farbstoff bei Dunkellagerung. Die Aufzeichnungsschicht kann dann erneut belichtet werden.

**Patentansprüche**

1. Lichtempfindliches, cyclische Polyimide enthaltendes Aufzeichnungsmaterial, dadurch gekennzeichnet, daß als lichtempfindliche Substanz eine Verbindung der Formel

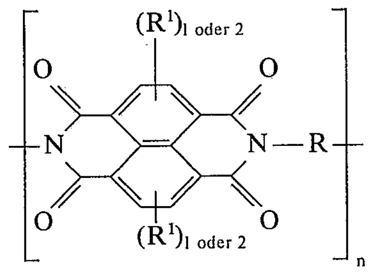

enthalten ist, worin

| | |
|---|---|
| R | ein zweiwertiger aliphatischer Rest ist, der eine Elektronendonatorfunktion enthält, |
| $R^1$ | Wasserstoff, Halogen, $-SO_3H$, $-CN$, $-COOR^2$, $-N(R^3)_2$, $-OR^4$, $-NO_2$, |
| $R^2$, $R^3$, $R^4$ | Wasserstoff oder $C_1-C_6$-Alkyl und |
| n | eine ganze Zahl von 2 bis 1000 bedeuten. |

2. Aufzeichnungsmaterial nach Anspruch 1 enthaltend eine Verbindung der Formel des Anspruchs 1 in der $R^1$ Wasserstoff und R von einem Alkylentriamin der Formel

$$NH_2-\left[(CH_2)_n-\underset{\displaystyle R^5}{\underset{|}{N}}-\right]_{1-5}(CH_2)_n-NH_2$$

abgeleitet ist, worin bedeuten:

$R^5$ = H, Alkyl, $CR^2O$

n = 1–4.

3. Aufzeichnungsmaterial nach Anspruch 1 enthaltend eine Verbindung der Formel des Anspruchs 1 in der $R^1$ Wasserstoff und R von einem Oxaalkylendiamin der Formel

$$NH_2-(CH_2)_m-O-[(CH_2)_m-O]_o-(CH_2)_m-NH_2$$

abgeleitet ist, worin bedeuten:

n = 1–4,

o = 0–2.

**Claims**

1. Light-sensitive recording material containing cyclic polyimides, characterised in that the light-sensitive substance used is a compound corresponding to the formula

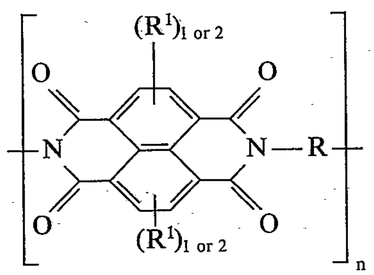

in which

R represents a divalent aliphatic group containing an electron donor function;
$R^1$ represents hydrogen, halogen, $-SO_3H$, $-CN$, $-COOR^2$, $-N(R^3)_2$, $-OR^4$, or $-NO_2$;
$R^2$, $R^3$, and $R^4$ represent hydrogen or $C_1-C_6$ alkyl and
n represents an integer of from 2 to 1,000.

2. Recording material according to claim 1, containing a compound corresponding to the formula of claim 1 in which $R^1$ represents hydrogen and R is derived from an alkylene triamine corresponding to the formula

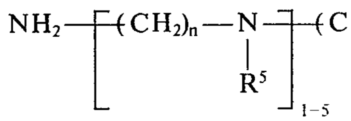

in which

$R^5$ = H, alkyl or $-CR^2O$ and

n = 1–4.

3. Recording material according to claim 1, containing a compound corresponding to the formula of claim 1 in which $R^1$ represents hydrogen and R is derived from an oxaalkylene diamine corresponding to the formula

$$NH_2-(CH_2)_m-O-[(CH_2)_m-O]_o-(CH_2)_m-NH_2$$

in which

n = 1–4, and

o = 0–2.

## Revendications

1. Matériau d'enregistrement sensible à la lumière contenant des polyimides cycliques, caractérisé en ce qu'il contient, comme substance sensible à la lumière, un composé de formule

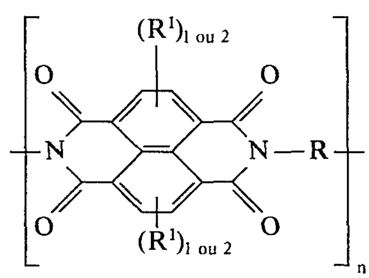

dans laquelle

R est un reste aliphatique divalent qui contient une fonction donneur d'électrons,
$R^1$ représente l'hydrogène, un halogène ou un groupe $-SO_3H$, $-CN$, $-COOR^2$, $-N(R^3)_2$, $-OR^4$, $-NO_2$;
$R^2$, $R^3$, $R^4$ représent l'hydrogène ou un groupe alkyle en $C_1-C_6$, et
n est un numbre entier de 2 à 1000.

2. Matériau d'enregistrement selon la revendication 1, contenant un composé de formule I de la revendication 1, dans laquelle $R^1$ est l'hydrogène et R dérive d'une alkylènetriamine de formule

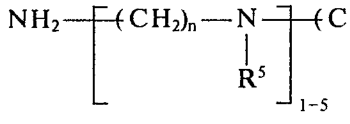

dans laquelle

$R^5$ = H, alkyle, $-CR^2O$

n = 1–4.

3. Matériau d'enregistrement selon la revendication 1, contenant un composé de formule de la revendication 1, dans laquelle $R^1$ es l'hydrogène et R dérive d'une oxaalkylènediamine de formule

$$NH_2-(CH_2)_m-O-[(CH_2)_m-O]_o-(CH_2)_m-NH_2$$

dans laquelle

n = 1–4,

o = 0–2.